(19) Europäisches Patentamt
European Patent Office
Office européen des brevets

(11) **EP 3 546 778 B1**

(12) **EUROPÄISCHE PATENTSCHRIFT**

(45) Veröffentlichungstag und Bekanntmachung des Hinweises auf die Patenterteilung:
**06.10.2021  Patentblatt 2021/40**

(51) Int Cl.:
**F16C 41/00** *(2006.01)*        **F16C 19/52** *(2006.01)*

(21) Anmeldenummer: **19160928.8**

(22) Anmeldetag: **06.03.2019**

(54) **FÜHRUNG, SENSORANORDNUNG UND VERFAHREN**

GUIDE, SENSOR ARRANGEMENT AND METHOD

GUIDAGE, DISPOSITIF CAPTEUR ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2018   DE 102018204648**

(43) Veröffentlichungstag der Anmeldung:
**02.10.2019   Patentblatt 2019/40**

(73) Patentinhaber: **Robert Bosch GmbH
70442 Stuttgart (DE)**

(72) Erfinder:
• **Ehrenpfordt, Ricardo
  70825 Korntal-Muenchingen (DE)**
• **Mansour, Ahmad
  71263 Weil Der Stadt (DE)**
• **Schellenberg, Max
  71254 Ditzingen (DE)**
• **Lamprecht, Lukas
  76547 Sinzheim (DE)**

(56) Entgegenhaltungen:
DE-A1-102005 023 205     DE-A1-102009 033 137
DE-A1-102015 201 121     US-A1- 2008 065 354

**Beschreibung**

Gebiet der Erfindung

Die Erfindung betrifft eine Führung, insbesondere eine Linearführung oder Drehführung, gemäß dem Oberbegriff des Anspruchs 1. Des Weiteren betrifft die Erfindung eine Sensoranordnung für eine Führung und ein Verfahren mit einer Führung.

Hintergrund der Erfindung

Aus dem Stand der Technik ist bekannt Ermüdungen, beispielsweise eine Materialermüdungen, von Linearführungen mit Sensoren zu überwachen. Beispielsweise wird in der DE 11 2005 002 077 T5 ein Linearwälzlager über einen Schwingungssensor überwacht. In der DE 10 2015 201 121 A1 erfolgt eine Überwachung einer Linearbewegungsvorrichtung mit wenigstens einer Reihe von Wälzkörpern durch Abgreifen einer Körperschallschwingung. In der DE 10 2009 033 137 A1 erfolgt eine gattungsgemäße Überwachung einer Linearführung durch die Kombination eines Schwingungssensors und eines Beschleunigungssensors.

Offenbarung der Erfindung

Demgegenüber liegt der Erfindung die Aufgabe zugrunde, eine Führung zu schaffen, die auf vorrichtungstechnisch einfache Weise sicher überwachbar ist. Außerdem soll eine Sensoranordnung geschaffen werden, mit der auf vorrichtungstechnisch einfache Weise eine sichere Überwachung, beispielsweise einer Führung, ermöglicht ist. Außerdem ist es Aufgabe der Erfindung, ein Verfahren mit einer Führung zu schaffen, mit dem auf einfache Weise eine sichere Überwachung der Führung ermöglicht ist.

Die Aufgabe hinsichtlich des Verfahrens wird gelöst gemäß den Merkmalen des Anspruchs 1.

Vorteilhafte Weiterbildungen der Erfindung sind Gegenstand der Unteransprüche.

Erfindungsgemäß ist eine Führung oder Linearführung oder Drehführung vorgesehen, wobei die Führung ein Führungsbauteil und eine Führungskomponente aufweist. Die Führungskomponente ist hierbei auf dem Führungsbauteil geführt und relativ zu diesem bewegbar. Bei dem Führungsbauteil handelt es sich um eine Führungsschiene oder um eine Führungsspindel. Bei der Führungskomponente handelt es sich um eine Kugelgewindemutter oder um einen Führungswagen. Es ist ein Sensor bei der Führungskomponente zur Erfassung eines Schwingungssignals oder einer Schwingung vorgesehen. Des Weiteren ist eine Auswertevorrichtung bei der Führungskomponente zum Auswerten des vom Sensor erfassten Schwingungssignals oder der vom Sensor ermittelten Daten vorgesehen. Von der Auswertevorrichtung, basierend auf dem vom Sensor erfassten Schwingungssignal, wird ein Bewegungsprofil der Führungskomponente ermittelt. Des Weiteren wird das Schwingungssignal eines Teils des Bewegungsprofils zur Ermüdungsdetektion und/oder Detektion des Schmierzustandes und/oder Detektion der Montagequalität verwendet, was vorteilhafterweise zu einer Einsparung einer Rechenkapazität bei der Ermüdungsdetektion führt, da nicht das gesamte Bewegungsprofil ausgewertet wird. Außerdem ist vorgesehen, dass, von der Auswertevorrichtung, das vom Sensor erfasste Schwingungssignal digital gefiltert ist. Basierend auf dem digital gefilterten Signal wird sodann das Bewegungsprofil der Führungskomponente ermittelt, was ebenfalls zu einer Einsparung einer Rechenkapazität führt.

Durch die erfindungsgemäße Führung kann somit mit vergleichsweise geringem Rechenaufwand eine Ermüdungsdetektion erfolgen. Durch den geringen Rechenaufwand ist für die Auswertevorrichtung vergleichsweise wenig Energie notwendig. Somit kann die Auswertevorrichtung beispielsweise kleiner ausgestaltet sein oder über Energiequellen versorgt werden, die klein ausgestaltet sind und/oder vergleichsweise wenig Energie zur Verfügung stellen. Somit sinkt der vorrichtungstechnische Aufwand der Führung. Mit dem Sensor kann beispielsweise ein Verschleiß der Führung und/oder der Führungskomponente detektiert werden und mit geringem Rechenaufwand auf Basis der Datenanalyse beispielsweise eine zielgerichtete, vorausschauende Wartung erfolgen, womit ungeplante Stillstände auf einfache Weise reduziert werden können. Die erfindungsgemäße Ermüdungsdetektion ist äußerst vorteilhaft bei der Führung oder der Führungskomponente einsetzbar, da bei dieser eine Vorhersagegenauigkeit und Vorhersagezuverlässigkeit der Ermüdungsdetektion deutlich komplexer als beispielsweise bei einem Radiallager ist und somit ein reduzierter Rechenaufwand zu einem großen Vorteil führt.

Wird die Führung beispielsweise in einer Werkzeugmaschine eingesetzt, so kann das Schwingungssignal auf einer Vielzahl von Einflüssen basieren, wie beispielsweise auf der Montage der Komponenten, auf Betriebsparameter, wie beispielsweise Vorschub, auf einer Drehzahl, auf wirkende Kräfte, auf Beschleunigungen, auf Belastungen, auf Partikel und Alterserscheinungen. Somit ist bei der erfindungsgemäß Führung durch den geringen Rechenaufwand nicht notwendig die Rechenoperationen extern, beispielsweise über das Internet oder über eine Cloud, durchzuführen, sondern kann autark mit geringem vorrichtungstechnischen Aufwand durch die Auswertevorrichtung bei der Führungskomponente vorgesehen sein. Durch die vereinfachte Ausgestaltung und der geringeren benötigten Energie der Auswertevorrichtung kann diese vorteilhafterweise auch bei einem geringem Bauraumbedarf eingesetzt werden, was äußerst vorteilhaft bei Führungen ist, da hier üblicherweise eine vergleichsweise geringer Bauraum zur Verfügung steht.

In weiterer Ausgestaltung der Erfindung kann, insbesondere von der Auswertevorrichtung, ein Frequenzband des Schwingungssignals oder ein Frequenzband des Schwingungssignals eines Teils des Bewegungsprofils ermittelt sein. Das Frequenzband kann dann für die Ermüdungsdetektion von der Auswertevorrichtung herangezogen werden. Somit wird für die Ermüdungsdetektion nicht das gesamte Spektrum des Schwingungssignals herangezogen, sondern nur ein Frequenzband, was Rechenleistung einspart. Vorteilhafterweise wird das Frequenzband in Abhängigkeit von einer Geschwindigkeit der Führungskomponente ermittelt. Somit kann auf Basis der errechneten Geschwindigkeit das für die Ermüdungsdetektion notwendig Frequenzband abgeschätzt und/oder aus einer Datenbank entnommen werden und durch Filtern von den nicht notwenigen Frequenzbändern bereinigt werden. Durch das Filtern ist somit eine Berechnung des gesamten Spektrums nicht mehr notwendig. Durch den Bezug auf die errechnete Geschwindigkeit ist es möglich, das für die Ermüdungsdetektion notwendige Frequenzband auf einfache Weise zu berechnen. Die Signalanalyse beziehungsweise die Ermüdungsdetektion kann dann nur noch in diesem Frequenzband erfolgen. Hierdurch kann die Datenmenge für die Auswertevorrichtung und somit der notwendige Rechenaufwand weiter erheblich reduziert werden. Durch das ermittelte Frequenzband können dann schnelle Änderungen, sogenannte Harmonics, herausgefiltert werden und somit langsame, kontinuierliche Veränderungen bei der Signalanalyse oder Ermüdungsdetektion, die bei einer kontinuierlichen Ermüdung auftreten, gezielt detektiert werden. Es ist somit nicht notwendig, theoretische Schadensfrequenzen über diskrete Moden im Spektrum des Schwingungssignals zu berechnen, was aufgrund der Vielzahl von Einflüssen bei einer Führung auf die Ermüdungsdetektion zu unzureichenden Ergebnissen führen würde.

In weiterer Ausgestaltung der Erfindung erfolgt die digitale Filterung derart, dass zumindest ein Teil der Bewegungsprofile oder alle Bewegungsprofile der Führungskomponente ermittelbar und/oder voneinander abgrenzbar sind. Die Ermüdungsdetektion oder Zustandsdetektion kann, wie vorstehend bereits angeführt, dann vorteilhafterweise nur für einen Teil des Bewegungsprofils erfolgen. Die digitale Filterung erfolgt vorzugsweise über einen Tiefpass. Dies hat den Vorteil, dass die Erkennung des Beschleunigungsprofils bei niedrigen Frequenzen erfolgt, da hierbei eine sicherere Erkennung und/oder Abgrenzbarkeit der Teile des Bewegungsprofils ermöglicht ist. Die hohen herausgefilterten Frequenzen eignen sich eher für eine spätere Ermüdungsdetektion beziehungsweise können bei einer späteren Ermüdungsdetektion mit berücksichtigt werden. Mit anderen Worten kann durch die digitale Filterung eine Erkennung von verschiedenen Profilen der Bewegung erfolgen. Mit Hilfe des Tiefpassfilters können die unterschiedlichen Bewegungsprofile aus dem Rohsignal oder Schwingungssignal extrahiert und detektiert werden. Alternativ oder zusätzlich zur digitalen Filterung über einen Tiefpass kann eine digitale Filterung über eine diskrete Wavelet Transformation (DTW) erfolgen. Hierbei kann beispielsweise die Erkennung der unterschiedlichen Teile der Bewegungsprofile oder Beschleunigungsprofile parallel in verschiedenen Frequenzbändern durchgeführt werden.

Über die Auswertevorrichtung sind mehrere der folgenden Bewegungsprofile der Führungskomponente ermittelt: ein Stillstandprofil, bei dem die Führungskomponente still steht; ein Startprofil, bei dem die Führungskomponente vom Stillstand in Bewegung gesetzt wird; ein Beschleunigungsprofil, bei dem die Geschwindigkeit der Führungskomponente erhöht wird; ein Profil konstanter Geschwindigkeit, bei dem die Führungskomponente mit einer konstanten Geschwindigkeit bewegt wird; ein Bremsprofil, bei dem die Führungskomponente abgebremst wird, insbesondere bis zum Stillstand. Die Ermittlung der unterschiedlichen Bewegungsprofile hat, wie vorstehend bereits angeführt, den Vorteil, dass die Ermüdungserkennung oder Ermüdungsdetektion nur in einem bestimmten oder mehreren bestimmten Bewegungsprofil/en durchgeführt werden kann.

So ist beispielsweise zur Vermeidung ungewünschter Beschleunigungseinflüsse die Ermüdungsdetektion bei dem Profil konstanter Geschwindigkeit durchgeführt. Des Weiteren ist es vorteilhaft, wenn die Ermüdungsdetektion von variierenden Betriebsparametern, wie beispielsweise einer Vorschubgeschwindigkeit, deren Variation auftretende Vibrationen deutlich verändern und feste Detektionsschwellen ständig verschieben würde, und Umgebungsstörungen unabhängig ist. Auf Basis des Schwingungssignals beim Startprofil und/oder Beschleunigungsprofil kann dann vorteilhafterweise die erreichte Geschwindigkeit der Führungskomponente in dem sich anschließenden Profil der konstanten Geschwindigkeit berechnet werden. Insbesondere kann eine Stärke und Dauer der Beschleunigung ermittelt werden, beispielsweise durch die Fläche unterhalb einer Beschleunigungskurve. Mit der Ermittlung der Geschwindigkeit können dann vorteilhafterweise bei der Ermüdungsdetektion ermittelte Merkmale störungsfrei auf die Geschwindigkeit referenziert beziehungsweise normiert werden. Somit kann vermieden werden, dass unterschiedliche Geschwindigkeiten der Führungskomponenten, die zu variierenden Vibrationen führen, eine Vorhersagegenauigkeit der Ermüdungsdetektion herabsenken und zu fehlerhaften Vorhersagen führen würden.

Wie vorstehend bereits angeführt, kann die Auswertevorrichtung die Ermüdungsdetektion vorzugsweise im Bewegungsprofil der konstanten Geschwindigkeit durchführen.

Wie bereits angeführt, kann des Weiteren vorteilhafterweise von der Auswertevorrichtung die Geschwindigkeit der Führungskomponente ermittelt sein und bei der Ermüdungsdetektion berücksichtigt werden. Die Geschwindigkeit wird vorzugsweise auf Basis oder anhand des Schwingungssignals ermittelt. Weiter vorzugsweise erfolgt die Ermittlung der Geschwindigkeit im Startprofil und/oder im Beschleunigungsprofil.

In weiterer Ausgestaltung der Erfindung kann vorgesehen sein, dass das Schwingungssignal oder Beschleunigungssensor-Rohsignal im Zeitbereich gemessen ist. Die Messung über den Sensor erfolgt vorzugsweise im Frequenzbereich bis 20 kHz, insbesondere im Frequenzbereich bis 1 kHz. Die Messung über den Sensor kann aufgrund eines vorbestimmten Ereignisses starten, womit der Sensor vorteilhafterweise und energiesparend nicht ständig in Betrieb ist. Die Sensormessung kann auch nach zumindest einer vorbestimmbaren Bedingung, beispielsweise nach einer vorbestimmten Zeitperiode und/oder nach einer Messung beendet sein. Beispielsweise kann die Messung des Sensors durch eine ansteigende Flanke bei einem Schwingungssignal getriggert oder ausgelöst werden. Der Sensor kann einen Beginn und/oder ein Ende der Bewegung der Führungskomponente erkennen, indem beispielsweise eine konfigurierbare Beschleunigungsschwelle für den Beginn und/oder das Ende festgelegt wird. Steigt die Beschleunigung über die festgelegte Beschleunigungsschwelle, so kann die Messung des Sensors beginnen und/oder fällt die Beschleunigung unter die vorbestimmte Beschleunigungsschwelle oder eine weitere vorbestimmte Beschleunigungsschwelle, so kann die Messung beendet werden. Alternativ oder zusätzlich ist denkbar, dass über eine Zählerund/oder Zeitfunktion ein Messtakt eingestellt wird. So kann beispielsweise zu bestimmten Zeiten eine Messung durchgeführt werden. Alternativ oder zusätzlich kann vorgesehen sein, dass ein Triggern oder Auslösen einer Messung des Sensors durch eine externe oder fremdgesteuerte Ansteuerung erfolgt, beispielsweise durch eine Anlagensteuerung oder ein Gateway durch ein elektrisches Signal.

Bei einer bevorzugten Ausführungsform kann vorgesehen sein, die Berechnung der Geschwindigkeit auf Basis diskreter Antriebsmoden durchzuführen, beispielsweise zur zusätzlichen Verifikation der im Zeitsignal oder bei den genannten Bewegungsprofilen berechneten Geschwindigkeit. Dies ist allerdings rechenaufwendig, da hierfür in einem Spektrum und nicht im Zeitsignal gerechnet wird. Eine Bereitstellung der Geschwindigkeit, beispielsweise über die Steuerung des Antriebsmotors, insbesondere über ein Triggersignal, ist alternativ oder zusätzlich ebenfalls denkbar. Dies führt allerdings zu einem Mehraufwand bei der Applikation der Sensorik, da Steuerbefehle hardwareseitig implementiert werden müssen.

In weiterer Ausgestaltung der Erfindung können von der Auswertevorrichtung vorteilhafterweise zusätzlich ein oder mehrere Korrekturfaktor/en ermittelt werden, um bei der Ermüdungsdetektion Störungen, beispielsweise Frequenzmoden benachbarte Aggregate, zu bereinigen. Die Korrekturfaktoren können beispielsweise, insbesondere innerhalb der Bewegungsprofile, auf Umgebungsbedingungen, wie beispielsweise Temperatur und/oder Hintergrundvibrationen und/oder Hintergrundgeräusche basieren.

Zum Berücksichtigen einer Temperatur ist vorzugsweise zusätzlich ein Temperatursensor, insbesondere bei der Führungskomponente, vorgesehen. Dieser kann mit der Auswertevorrichtung verbunden sein. Zur Detektion von Hintergrundgeräuschen kann vorteilhafterweise einfach ein Mikrophon, das insbesondere als Mikro-ElektroMechanisches-System (MEMS) ausgebildet ist, insbesondere bei der Führungskomponente, vorgesehen sein. Dieses ist vorzugsweise mit der Auswertevorrichtung verbunden. Zur Detektion von Hintergrundvibrationen kann vorteilhafterweise vorgesehen sein, dass der Sensor nach dem Ende des Bewegungsprofils, also beispielsweise bei einem Stoppen der Führungskomponente, oder außerhalb des Bewegungsprofils zumindest zeitweise weiter ein Schwingungssignal erfasst. Mit anderen Worten können Hintergrundvibrationen in der Art detektiert werden, dass das Sensorsystem eine Messdauer aufweist, welche das Ende der Fahrt zumindest etwas überdauert. So können in jedem Messtakt Hintergrundvibrationen während der Stopphase der Führungskomponente detektiert und eingebunden werden. Mit anderen Worten können von der Auswertevorrichtung über den Sensor Hintergrundschwingungen während des Stillstandprofils der Führungskomponente ermittelt sein.

Die Auswertevorrichtung ermittelt beim Schwingungssignal eines Teils des Bewegungsprofils ein oder mehrere Merkmal/e.

Zusätzlich kann die Auswertevorrichtung beim ermittelten Frequenzband und/oder beim Schwingungssignal ein oder mehrere Merkmal/e ermitteln. Anhand dieser Merkmale kann dann vorteilhafterweise eine Ermüdungsdetektion oder Schadensdetektion durchgeführt werden. Das Merkmal oder die Merkmale ist/sind aus folgenden Merkmalen ausgewählt: Mittelwert; mittlere absolute Abweichung (MAB); quadratischer Mittelwert (Root Mean Square (RMS)). Insbesondere der quadratische Mittelwert weist einen geringen Rechenaufwand auf. Allerdings weisen auch die anderen Merkmale einen vergleichsweise geringen Rechenaufwand auf.

Bei einer bevorzugten Ausgestaltung der Erfindung kann/können von der Auswertevorrichtung bei einem Teil der Merkmale oder einem jeweiligen Merkmal mehrere Messungen berücksichtigt sein. Des Weiteren kann das Merkmal oder das jeweilige Merkmal über die Messungen gemittelt sein. Eine zusätzliche Mittelung eines oder mehrerer Merkmale reduziert vorteilhafterweise den Effekt von spontanen Störungen. Für ein Sensorsignal X mit N Messungen oder Samples können die Merkmale wie folgt berechnet werden:

$$X_f = X * h$$

$$X_{abs} = \left| X_f \right|$$

$$\bar{x} = \frac{1}{N} \sum_{i=1}^{N} X_{abs}(i)$$

$$x_{rms} = \frac{1}{N} \sqrt{\sum_{i=1}^{N} X_{abs}^{2}(i)}$$

$$x_{mad} = \frac{1}{N} \sum_{i=1}^{N} |X_{abs}(i) - \bar{x}|$$

$X_f$ ist das gefilterte Signal, h ist die Übertragungsfunktion des Filters, $X_{abs}$ ist das Absolut von $X_f$, $\bar{x}$ ist der Mittelwert, $x_{rms}$ ist der Root Mean Square und $x_{mad}$ ist der MAD (Middle Absolute Deviation)-Wert oder MAB-Wert.

In weiterer Ausgestaltung der Erfindung kann vorgesehen sein, dass über die Auswertevorrichtung das ermittelte oder berechnete Merkmal oder die ermittelten oder berechneten Merkmale mit der berechneten oder ermittelten Geschwindigkeit, insbesondere der Geschwindigkeit im konstanten Geschwindigkeitsprofil, normiert ist/sind. Hierdurch kann vorteilhafterweise eine Kompensation von Auswirkungen unterschiedlicher Geschwindigkeiten auf die Merkmale beziehungsweise auf die Ermüdungsdetektion kompensiert werden. Zusätzlich oder alternativ kann vorgesehen sein, dass über die Auswertevorrichtung das ermittelte Merkmal oder die ermittelten Merkmale mit einem oder mehreren errechneten Korrekturfaktor/en korrigiert ist/sind. Als Korrekturfaktor kann beispielsweise ein Sprung durch Hintergrundvibrationen kompensiert werden.

Das ermittelte Merkmal oder die ermittelten Merkmale sind auf einem Speicher, insbesondere der Führungskomponente oder eines oder des Mikrocontrollers oder der Auswertevorrichtung, gespeichert. Somit erfolgt auf einfache Weise ein Vergleich gespeicherter Merkmale mit neu ermittelten Merkmalen, um eine Ermüdungsdetektion durchzuführen.

Bevorzugterweise können von der Auswertevorrichtung bei mehreren ermittelten unterschiedlichen Typen von Merkmalen diese kombiniert werden, um einen Rechenaufwand vorteilhafterweise zu reduzieren. Mit Vorteil werden zur Kombination der Merkmale Multivariate oder mehrdimensionale Verteilungen aufgebaut, insbesondere ein Mittelwert-Vektor oder eine Kovarianz-Matrix. Die Auswertevorrichtung kann bei mehreren ermittelten unterschiedlichen Typen von Merkmalen diese oder einen Teil davon parallel analysieren und/oder diese durch eine lineare Kombination analysieren. Mit anderen Worten kann die Analyse parallel in einzelnen Dimensionen oder Merkmalen oder durch eine lineare Kombination der Merkmale erfolgen. Für die Kombination der Merkmale kann folgende Formel verwendet werden:

$$F = a_1 F_1 + a_2 F_2 + \cdots + a_m F_m$$

Hierbei kann $a_i$ der Gewichtsfaktor für das jeweilige Merkmal $F_i$ sein, wobei dann F als Merkmal für die Analyse oder die Ermüdungsdetektion verwendet werden kann. Mit andere Worten kann bei der Kombination von Merkmalen diesen jeweils ein Gewichtungsfaktor zugeordnet sein. Die Merkmale werden beispielsweise einfach aufsummiert.

In weiterer Ausgestaltung der Erfindung werden von der Auswertevorrichtung das, insbesondere aktuell, ermittelte Merkmal oder die, insbesondere aktuell, ermittelten Merkmale mit den entsprechenden gespeicherten Merkmalen verglichen. Hierdurch kann dann die Auswertevorrichtung auf eine Veränderung der Merkmale schließen und Rückschlüsse ziehen. Beispielsweise kann die Auswertevorrichtung bei einem Vergleich der Merkmale zwischen einer Verkleinerung und/oder Vergrößerung und/oder nicht-Veränderung des oder der Merkmal/e unterscheiden. Mit anderen Worten kann fortlaufend eine Steigung der Merkmalswerte oder der Merkmale beziehungsweise der kombinierten Merkmalswerte oder kombinierten Merkmale im Vergleich zu den vorherigen Merkmalen oder den vorherigen kombinierten Merkmalen berechnet werden. Somit ist beispielsweise denkbar, die kombinierten Merkmale alternativ oder zusätzlich zu den einzelnen Merkmalen oder zu dem einzelnen Merkmal zu speichern.

Ist eine Veränderung oder eine Steigung des Merkmals oder der untersuchten Merkmale oder des kombinierten Merkmals kleiner oder gleich 0, kann die Auswertevorrichtung daraus schließen, dass keine Ermüdung vorliegt. Somit kann sich die Führung in einer Einlaufphase oder einer stabilen Phase befinden. Bei einer Verkleinerung der Steigung kann von einer Einlaufphase der Führung ausgegangen werden. Ist die Steigung kleiner als 0, können beispielsweise Wälzkörper und/oder Führungsbahnen durch Einlaufen sich setzen. Energien im Spektrum können hierbei sinken und Vibrationen verringert werden. Auf die Einlaufphase folgt die stabile Phase. Auf Basis des energetischen Niveaus des Startpunkts der Einlaufphase kann eine Montagekontrolle erfolgen. Ein verspannt montiertes System weicht deutlich von einem korrekt montierten System ab. Somit kann festgestellt werden, dass die Auswertevorrichtung auf Basis der Größe des Merkmals oder der Merkmale oder des kombinierten Merkmals zum Startzeitpunkt der Benutzung der Führungskomponente durch Vergleich mit einem Referenzwert festgestellt werden kann, ob die Führung korrekt montiert ist.

Die Auswertevorrichtung geht von einer nicht-Veränderung des oder der Merkmal/e aus, wenn dies/e unterhalb einer oberen Grenze und/oder oberhalb einer unteren Grenze und/oder zwischen zwei Grenze/n liegt oder liegen.

In weiterer Ausgestaltung der Erfindung kann die Auswertevorrichtung von einer nicht-Veränderung des kombinierten Merkmals ausgehen, wenn dies/e unterhalb einer oberen Grenze und/oder oberhalb einer unteren Grenze und/oder zwischen zwei Grenze/n liegt oder liegen. Mit anderen Worten kann bei einer Steigung von, insbesondere etwa, 0 ausgegangen werden, dass sich die Führung in einer stabilen Phase befindet. Es gibt dann beispielsweise kaum Änderungen bei dem erfassten Schwingungssignal. Die stabile Phase nimmt in der Regel den überwiegenden Teil der Lebensdauer des Systems ein. Innerhalb der stabilen Phase können alle neuen Merkmale stetig in die Berechnung der Grenzbildung, beispielsweise über Control Charts, insbesondere mit 3a, der stabilen Phase einbezogen werden und diese stetig aktualisieren. Mit anderen Worten kann die Auswertevorrichtung vorzugsweise bei einer nicht-Veränderung eines Merkmals oder von Merkmalen oder des kombinierten Merkmals dieses oder diese bezüglich einer Berechnung der Grenze oder der Grenzen mit einbeziehen. Die Grenzen oder die Grenze kann somit adaptiv angepasst werden. Mit anderen Worten kann die Auswertevorrichtung prüfen, ob das oder die Merkmal/e unterhalb oder oberhalb einer Grenze oder oberen Grenze liegt, und/oder ob das oder die Merkmal/e unterhalb oder oberhalb einer Grenze oder unteren Grenze liegt, und/oder ob das oder die Merkmal/e zwischen zwei Grenzen liegt oder liegen. Das Merkmal oder die Merkmale werden dann von der Auswertevorrichtung bei einer Berechnung der Grenze oder der Grenzen eingesetzt, wodurch die Grenze oder die Grenzen adaptiv anpassbar ist/sind.

Die Auswertevorrichtung kann in weiterer Ausgestaltung der Erfindung von einer Vergrößerung des oder der Merkmal/e oder des kombinierten Merkmals ausgehen, wenn dies oder diese oberhalb der Grenze oder der Grenzen liegen. Ist somit eine Steigung, insbesondere der auf die Geschwindigkeit normierten, Merkmale kontinuierlich für eine Folge mehrerer Messungen größer 0, ist eine Ermüdung möglich. Die Auswertevorrichtung kann dann bei einer Vergrößerung des oder der Merkmal/e oder des kombinierten Merkmals einen oder mehrere Ausreißertests durchführen. Durch Ausreißertests können Störungen erkannt und herausgefiltert werden, wie beispielsweise ein sprunghafter kurzzeitiger Anstieg von Merkmalen.

In weiterer Ausgestaltung der Erfindung kann vorgesehen sein, dass die Auswertevorrichtung bei einer Vergrößerung des oder der Merkmale oder des kombinierten Merkmals unterschiedliche Warnungen ausgeben kann. Beispielsweise kann bei einem Überschreiten der, insbesondere oberen, Grenze von dem oder den Merkmale/n oder dem kombinierten Merkmal eine, insbesondere erste, Warnung oder Warnung Level 1 ausgegeben werden. Mit der Warnung Level 1 kann somit das Verlassen der berechneten Grenzen der stabilen Phase (größer 5σ) aufgezeigt werden. Als weitere Warnung kann vorgesehen sein, wenn ein Überschreiten eines Werts des oder der Merkmale oder des kombinierten Merkmals gegenüber dem maximalen Wert des entsprechenden Merkmals oder der entsprechenden Merkmale in einer Einlaufphase der Führungskomponente oder zu Beginn der Aufzeichnungen der Führungskomponente erfolgt, wobei dann eine, insbesondere zweite, Warnung oder Warnung Level 2 ausgegeben werden kann. Mit anderen Worten kann beim Überschreiten des energetischen Niveaus des Starrpunkts der Einlaufphase die Warnung Level 2 ausgelöst werden. Ist keine Einlaufphase vorhanden, beispielsweise wenn der Sensor nachgerüstet wurde, dann kann anstelle der Warnung Level 1 direkt Warnung Level 2 ausgegeben werden. In weiterer Ausgestaltung der Erfindung kann von der Auswertevorrichtung ein Alarm oder eine, insbesondere dritte, Warnung oder Warnung Level 3 ausgegeben werden, wenn eine oder mehrere Voraussetzungen erfüllt sind, die aus folgenden Voraussetzungen ausgewählt ist/sind: Nach Warnung Level 2 wird eine vorbestimmte Zyklenzahl erreicht, wobei als Zyklenzahl die Anzahl der Fahrzyklen der Führungskomponente oder der Messzyklen der Auswertevorrichtung vorgesehen sein kann; eine geschätzte Restlebensdauer, insbesondere der Führungskomponente ist erreicht; ein oder mehrere Merkmale überschreiten eine bestimmte statistische Grenze ($n \times \sigma$); eine absolute oder konfigurierbare Grenze oder Schwellwert für das Merkmal oder die Merkmale oder eines Teils der Merkmale ist erreicht.

In weiterer Ausgestaltung der Erfindung kann mit Vorteil von der Auswertevorrichtung die Wegstrecke der Führungskomponente ermittelt sein. Mit anderen Worten kann die Auswertevorrichtung die Auswertung ortsaufgelöst durchführen. Somit kann, um bei der Ermüdungsdetektion nicht nur die bewegte Führungskomponente, sondern auch das Führungsbauteil zu monitoren, es vorteilig sein, die, insbesondere gesamte, Wegstrecke zu messen und die Auswertung ortsaufgelöst durchzuführen. Auf diese Weise können beispielsweise Schädigungen des Führungsbauteils ortsaufgelöst detektiert und zugeordnet werden. Ist die Führungskomponente defekt, so führt dies üblicherweise zu steigenden Merkmalen, wobei dies konstant über die volle gesamte Fahrt oder über die gesamte Wegstrecke erfolgt. Ist das Führungsbauteil defekt, so weisen die ermittelten Merkmale positionsabhängige Steigungen innerhalb der Fahrt oder der Wegstrecke auf. Bei einem defekten Antriebsmotor oder beispielsweise bei einem defekten Spindellager zeigen die Merkmale einen kontinuierlichen Anstieg bei einer Bewegung und Annäherung der Führungskomponente hin zum Antriebsmotor.

Alternativ oder zusätzlich ist denkbar, die Ermüdungsdetektion während einer, insbesondere definierten, Referenzfahrt durchzuführen. Dies hat zur Folge, dass die Geschwindigkeit oder die Lineargeschwindigkeit und der Frequenzbereich bekannt sind. Es gibt dann weniger Störquellen durch Hintergrundsignale. Zudem unterliegen die Merkmale geringeren Schwankungen und müssen nicht auf Geschwindigkeiten normiert werden.

Vorzugsweise ist bei der Führungskomponente eine Energieerzeugungseinheit zur Versorgung eines Teils der elektronischen Komponenten oder aller elektronischer Komponenten der Führungskomponente vorgesehen. Die Energieerzeugungseinheit ist dabei vorteilhafterweise derart ausgestaltet, dass diese Energie bei einer relativen Bewegung zwischen dem Führungsbauteil und der Führungskomponente erzeugt. Da die Auswertevorrichtung aufgrund der vergleichsweise einfachen Rechenoperationen eine geringe Rechenleistung aufweist und somit einen vergleichsweise geringen Energiebedarf hat, kann diese ohne Weiteres autark über die Energieerzeugungseinheit versorgt werden. Zur Energiegewinnung kann beispielsweise ein sogenanntes "Energy Harvesting" eingesetzt werden. Des Weiteren ist denkbar, einen Energiespeicher vorzusehen, der, insbesondere über die Energieerzeugungseinheit, geladen werden kann. Denkbar wäre auch, den Energiespeicher bei Bedarf zusätzlich oder alternativ extern zu laden. Der Energiespeicher kann dann zur Versorgung eines Teile oder aller elektronischer Komponenten der Führungskomponente vorgesehen sein, insbesondere für diejenigen elektronischen Komponenten, die für die Ermüdungsdetektion zuständig sind.

Vorzugsweise wertet die Auswertevorrichtung autark die vom Sensor erfassten Daten aus.

Bei dem Sensor handelt es sich beispielsweise vorrichtungstechnisch einfach um einen Beschleunigungssensor oder Vibrationssensor. Der Sensor ist vorzugsweise als mikroelektro-mechanisches System (MEMS) ausgestaltet. Vorzugsweise misst der Sensor Schwingungssignale im Frequenzbereich von 0 bis 20 kHz, weiter vorzugsweise zwischen 0 bis 3 kHz, weiter vorzugsweise zwischen 0 bis 1 kHz. Der Sensor ist beispielsweise als 3-achsiger Beschleunigungssensor, insbesondere mit kapazitivem Messprinzip ausgestaltet. Denkbar ist, eine Mehrzahl von Sensoren vorzusehen.

Vorzugsweise weist die Auswertevorrichtung eine Auswertesoftware auf. Des Weiteren ist denkbar, dass die Auswertevorrichtung einen Prozessor aufweist und/oder als Mikrocontroller ausgebildet ist. Der Mikrocontroller kann beispielsweise zumindest eine Peripheriefunktion aufweisen. Des Weiteren kann die Auswertevorrichtung einen Arbeitsund/oder Programmspeicher aufweisen, der oder die Teil des Mikrocontrollers sein können. Die Auswertevorrichtung kann ebenfalls als MEMS ausgestaltet sein oder zusammen mit dem Sensor ein MEMS ausbilden. Erfindungsgemäß ist es ermöglicht den Funktionsumfang der Führung durch freie Kapazitäten der Auswertevorrichtung und/oder eine vergleichsweise geringe Anzahl von Speicherbausteinen und/oder energieautark und/oder eine kabellose Ermüdungsdetektion, insbesondere auf Basis von Primär- oder Sekundärzellen mit Energy Harvesting, zu verbessern.

Bei einer weiteren bevorzugten Ausgestaltung der Erfindung kann eine Datenübertragungsvorrichtung oder Kommunikationsvorrichtung, insbesondere bei der Führungskomponente, vorgesehen sein. Es ist denkbar, dass diese Teil des MEMS oder Mikrocontrollers ist. Mit der Kommunikationsvorrichtung können dann Daten der Auswertevorrichtung und/oder des Sensors an eine externe Kommunikationsvorrichtung übermittelt werden, vorzugsweise kabellos. Die externe Kommunikationsvorrichtung kann Teil einer Maschinensteuerung sein oder eine Schnittstelle zum Internet oder zu einer Cloud bereitstellen. Vorzugsweise wird über die Kommunikationsvorrichtung das Ergebnis der Auswertevorrichtung vorzugsweise mit einer minimalstmöglichen Datenmenge übermittelt. Beispielsweise kann lediglich ein Bit vorgesehen sein, wobei dann die Information ausgegeben werden kann, ob eine Ermüdung vorliegt oder nicht. Mit anderen Worten ist vorteilhaft, wenn pro Fahrt der Führungskomponente ausschließlich wenige Zahlenwerte oder Merkmale, insbesondere aber nur das Ergebnis der Ermüdungsdetektion (Ermüdung ja/nein) und/oder zu erwartende Restlebensdauer und/oder notwenige Aktionen, übertragen werden.

Vorzugsweise ist bei der Führungskomponente eine Elektronik vorgesehen, die analoge Sensorsignale in digitale Signale umwandeln kann. Außerdem ist denkbar, dass die Elektronik einen seriellen Bus, wie I$^2$C oder SPI bereitstellt.

Die autarke Energieversorgung, insbesondere der Auswertevorrichtung und/oder des Sensors, hat den Vorteil, dass keine Batterien oder Akkus notwendig sind. Systeme, die lediglich eine Batterie oder eine Akku für die Energieversorgung aufweisen, haben üblicherweise eine energetische Lebensdauer von zwei bis fünf Jahren. Somit ist in regelmäßigen Abständen nachteilig bei derartigen Systemen ein Batteriewechsel notwendig, was Kosten verursacht und zu einer Umweltbelastung führt. Bei einer Vielzahl von Sensoren wären derartige Systeme praktisch nicht einsetzbar. Mit dem erfindungsgemäßen System kann somit eine autarke Ermüdungsdetektion durchgeführt werden, wobei für die Komponenten keine Wartung erforderlich ist.

In weiterer Ausgestaltung der Erfindung können die Komponenten für die Ermüdungsdetektion, insbesondere der Sensor, Auswertevorrichtung, Energieversorgung etc. als Modul ausgestaltet sein. Ein derartiges Modul ist einfach montierbar und kann beispielsweise auch einfach nachgerüstet werden.

Mit Vorteil handelt es sich bei der Führungskomponente um eine Gewindemutter oder um eine Kugelgewindemutter. Das Führungsbauteil kann dann eine Spindel oder Führungsspindel sein. An der Kugelgewindemutter kann ein Gehäuse festgelegt sein, das den Sensor und/oder die Auswertevorrichtung und/oder eine oder mehrere der oben stehend genannten elektronischen Komponenten aufweist. In Richtung der Führungsspindel gesehen kann das Gehäuse axial an der Kugelgewindemutter angeordnet sein. Die Kugelgewindemutter hat vorzugsweise einen Flansch, von dem aus sich in eine erste axiale Richtung der Mutternkörper erstreckt und in entgegengesetzter Richtung kann sich das Gehäuse erstrecken. Vorzugsweise weist das Gehäuse in Radialrichtung gesehen eine Außenmantelfläche auf, die sich vorzugsweise zumindest abschnittsweise entlang eines Kreiszylinders erstreckt, wobei sich eine Längsachse des Kreiszylinders koaxial oder in Parallelabstand zur Längsachse der Führungsspindel erstrecken kann. Ein Durchmesser des Gehäuses ist dabei vorzugsweise kleiner oder gleich wie ein maximaler Durchmesser der Kugelgewindemutter. In weiterer Ausgestaltung der Erfindung umgreift das Gehäuse die Führungsspindel nur abschnittsweise. Insbesondere ist das Gehäuse auf Seiten der Führungsspindel etwa u-förmig ausgestaltet. Ein Kreissegmentwinkel des Gehäuses beträgt beispielsweise maximal 180°. Somit kann das Gehäuse einfach nachrüstbar sein, indem es einen Kreissegmentwinkel nicht überschreitet, welcher es erlaubt, das Gehäuse bei der Montage über die Führungsspindel anzuordnen und diese zu übergreifen. Denkbar wäre auch, das Gehäuse mehrteilig auszugestalten, das die Führungsspindel dann umgreifen kann und durch die mehrteilige Ausgestaltung einfach montierbar ist. Beispielsweise ist das Gehäuse hinsichtlich einer einfachen Nachrüstbarkeit oder einfachen Montage über Befestigungsmittel mit der Kugelgewindemutter, insbesondere mit dem Flansch der Kugelgewindemutter, verbunden. Zwischen dem Gehäuse und der Kugelgewindemutter kann auch ein Adapter vorgesehen sein, womit Anschraubpunkte oder Befestigungpunkte flexibel angeordnet und ausgestaltet werden können.

Bei einer bevorzugten Ausgestaltung der Erfindung kann vorgesehen sein, dass die Führungskomponente ein Führungswagen ist und das Führungsbauteil eine Führungsschiene. Beispielsweise ist der Führungswagen wälzkörpergelagert. Mit anderen Worten kann die Führung als Profilschienenführung ausgestaltet sein. Am Führungswagen kann ein Gehäuse gemäß einem oder mehrerer der vorherstehenden Aspekte vorgesehen sein. Beispielsweise ist das Gehäuse auf einer in Längsrichtung weisenden Seite des Führungswagens angeordnet. Weiter vorzugsweise überschreitet das Gehäuse Außenabmessungen der Außenkontur - insbesondere in einer Ebene quer zur Führungsschiene gesehen - des Führungswagens nicht. Das Gehäuse ist beispielsweise etwa u-förmig ausgestaltet und kann somit einfach die Führungsschiene übergreifen. Denkbar wäre auch, das Gehäuse mehrteilig hinsichtlich einer einfachen Nachrüstbarkeit auszugestalten.

Neben dem beschriebenen Sensor ist denkbar, einen oder mehrere weitere Sensoren vorzusehen. So kann beispielsweise eine optische Sensorik und/oder eine Ultra-Schall-Sensorik zur Detektion einer Ölfilmdicke und/oder der Schmierungsqualität und/oder einer Schmiermitteltrübung und/oder von Partikeln vorgesehen sein. Eine Detektionsachse des zusätzlichen Sensors oder der zusätzlichen Sensoren ist vorzugsweise in Richtung der Oberfläche des Führungsbauteils, insbesondere in Richtung der Oberfläche der Führungsspindel oder der Führungsschiene, gerichtet. Wie oben stehend bereits erläutert ist denkbar, als zusätzliche Sensorik eine schallbasierte Sensorik, insbesondere ein Mikrophon, zur Detektion von Hintergrundgeräuschen vorzusehen. Außerdem kann eine Temperatursensorik vorgesehen sein.

Denkbar wäre eine Sensoranordnung vorzusehen, die einen Sensor hat zum Erfassen eines Schwingungssignals. Des Weiteren kann eine Auswertevorrichtung bei der Sensoranordnung zum Auswerten des vom Sensor erfassten Schwingungssignals vorgesehen sein. Basierend auf dem vom Sensor erfassten Schwingungssignal kann dann ein Bewegungsprofil der Führungskomponente ermittelt sein und das Schwingungssignal zumindest eines Teils des Bewegungsprofils kann dann zur Ermüdungsdetektion verwendet werden. Alternativ oder zusätzlich ist denkbar, dass das vom Sensor erfasste Schwingungssignal digital gefiltert ist und basierend auf dem digital gefilterten Signal das oder ein Bewegungsprofil der Führungskomponente ermittelt ist.

Die Sensoranordnung kann entsprechend der oben stehenden Aspekte ausgestaltet sein.

Erfindungsgemäß ist ein Verfahren mit einer Führung gemäß einem oder mehrerer der vorhergehenden Aspekte vorgesehen, das folgende Schritte aufweist.

- Ermittlung eines Bewegungsprofils basierend auf dem vom Sensor erfassten Schwingungssignals, wobei das Schwingungssignal eines Teils des Bewegungsprofils zur Ermüdungsdetektion verwendet wird,
- und digitale Filterung des vom Sensor erfassten Schwingungssignals, wobei basierend auf dem digital gefilterten Schwingungssignal das Bewegungsprofil der Führungskomponente ermittelt wird.

Alternativ oder zusätzlich wäre folgender Schritt denkbar: Ermittlung eines Frequenzbands des vom Sensor erfassten Schwingungssignals, wobei das Frequenzband für die Ermüdungsdetektion von der Auswertevorrichtung herangezogen ist.

Des Weiteren kann das Verfahren einen oder mehrere der oben stehend angeführten Aspekte aufweisen.

Mit anderen Worten ist ein Ermüdungsdetektionssensor für Linearantriebe und Linearführungen vorgesehen, der insbesondere zur Detektion von mechanischen Ermüdungen der Linearführung vorgesehen ist. Hierbei kann eine geschwindigkeitsabhängige Normierung oder Merkmalskorrektur eingesetzt sein, welche die Detektion der Ermüdungen im laufenden Betrieb ohne Referenzpfad erlaubt. Alternativ oder zusätzlich kann eine integrierte Phasenerkennung vorgesehen sein, welche eine Einlaufphase, eine stabile Phase und eine Ermüdungsphase detektiert und in die Analyse einbezieht. Grenzen der stabilen Phase können ständig angepasst und adaptiert oder nachgeregelt werden. Somit sind keine festen Schwellwerte erforderlich, was zu einer adaptiven Ermüdungsdetektion führt. Bei der Ermüdungsdetektion kann insbesondere festgestellt werden, ob eine kontinuierliche Steigung relevanter Merkmale und/oder ob ein Verlassen von berechneten Grenzen der stabilen Phase und/oder ob ein Überschreiten des energetischen Niveaus des Startpunkts der Einlaufphase vorliegt. Des Weiteren kann festgestellt werden, ob ein Grenzwert, wie maximale Zyklenzahl nach Verlassen der Grenzen der stabilen Phase und/oder eine geschätzte Restlebensdauer und/oder Merkmale größer $n \times \sigma$ sind und/oder ein absoluter oder konfigurierbarer Schwellwert erreicht ist.

Mit anderen Worten kann erfindungsgemäß eine vollständige sensornahe, selbstadaptierende Ermüdungsdetektion oder Signalverarbeitung und Signalanalyse auf einem im Sensorsystem hoch integrierten Mikrocontroller vorgesehen sein. Die Ermüdungsdetektion kann dabei eine Signalerfassung und/oder -messung und/oder eine Beschleunigungs-Profil-Erkennung und/oder eine Parameter-Schätzung und/oder ein Filtern und/oder eine Berechnung von Merkmalen und/oder eine Steigungsberechnung vorsehen.

Mit anderen Worten kann mit der Führung und/oder mit dem Verfahren und/oder mit der Sensoranordnung eine Auswertung oder Ermüdungsdetektion im laufenden Betrieb, beispielsweise eines Linearwälzlagers, durchführbar sein und nicht nur während einer besonderen Messfahrt. Vorteilhafterweise wird das Schwingungssignal digital gefiltert. Aus dem gefilterten Signal können dann Phasen konstanter Geschwindigkeit, insbesondere allgemeine stationäre Betriebsbedingungen erkannt werden. Die Auswertung kann primär in diesen Phasen stattfinden. Informationen aus den anderen Phasen können verwendet werden, um die Auswertung zu unterstützen, indem beispielsweise eine Geschwindigkeit aus den anderen Phasen ermittelt wird.

Mit anderen Worten kann die Auswertevorrichtung unmittelbar am Läufer des Linearwälzlagers angebracht sein. Durch die erfindungsgemäße Ausgestaltung ist es sehr kompakt aufgebaut und kommt mit einer geringen elektrischen Versorgungsleistung aus. Es kann die Bewegung des Linearwälzlagers ausgenutzt werden, um die Auswertevorrichtung mit Energie zu versorgen. Es ist ausreichend, den entsprechenden Mikrocontroller vergleichsweise leistungsschwach auszugestalten. Das Auswerteverfahren ist so einfach wie möglich ausgestaltet, so dass es vom Mikrocontroller ausführbar ist. Dennoch weist es eine zuverlässige Erkennung eines Schadens auf. Eine Auswertung im Frequenzbereich ist nicht notwendig. Die Auswertevorrichtung kommt vorteilhafterweise mit Daten aus, die sie selbst ermittelt. Sie ist vorteilhafterweise nicht an eine übergeordnete Steuerung angeschlossen. Vorteilhaft ist auch die Möglichkeit einer Ermittlung der Fahrgeschwindigkeit. Diese kann durch Integration des Signals eines Beschleunigungssensors ermittelt sein. Die vom Beschleunigungssensor ermittelten Schwingungssignale können wesentlich von der Fahrgeschwindigkeit abhängen.

Kurze Beschreibung der Zeichnungen

Bevorzugte Ausführungsbeispiele der Erfindung werden im Folgenden anhand schematischer Zeichnungen näher erläutert. Es zeigen:

Figur 1a in einer perspektivischen Darstellung eine Führung gemäß einem Ausführungsbeispiel,
Figur 1b in einer Seitenansicht die Führung aus Figur 1a,
Figur 2a in einer perspektivischen Darstellung einen Teil einer Führung zusammen mit einer Sensoranordnung,
Figur 2b in einer perspektivischen Darstellung eine Führung gemäß einem weiteren Ausführungsbeispiel,
Figur 3 in einem Ablaufdiagramm eine Funktionsbeschreibung der Führung gemäß den Ausführungsbeispielen,
Figur 4 ein über einen Sensor erfassbares Schwingungssignal der Führung gemäß den Ausführungsbeispielen,
Figur 5 in einem Diagramm eine Start- und Beschleunigungsphase der Führung für unterschiedliche Geschwindigkeiten,
Figur 6 in einem Diagramm Analyseergebnisse einer Ermüdungsdetektion der Führung und
Figur 7 das Diagramm aus Figur 6 mit eingezeichneten Warngrenzen.

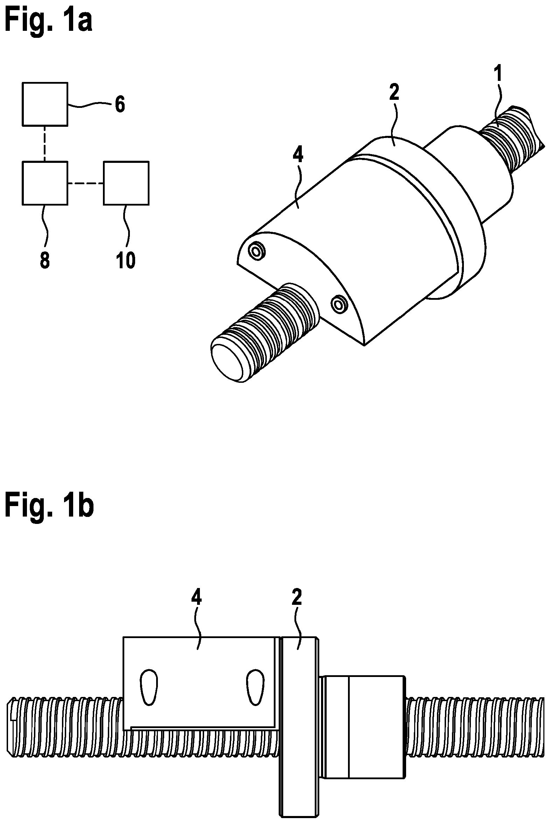

Gemäß Figur 1a hat eine Führung gemäß einem Ausführungsbeispiel ein Führungsbauteil in Form einer Führungsspindel 1 und eine Führungskomponente in Form einer Kugelgewindemutter 2. An einem Flansch der Kugelgewindemutter 2 ist auf einer in Axialrichtung weisenden Stirnseite ein Gehäuse 4 befestigt. In diesem ist ein Sensor 6 vorgesehen, der schematisch in Figur 1a dargestellt ist. Mit diesem kann ein Schwingungssignal der Führung erfasst werden. Des Weiteren ist eine Auswertevorrichtung 8 in Form eines Mikrocontrollers vorgesehen, die ebenfalls schematisch in Figur 1a dargestellt ist und mit dem Sensor 6 verbunden ist. Des Weiteren ist die Auswertevorrichtung 8 mit einer Energieerzeugungseinheit 10 verbunden, wobei auch diese schematisch dargestellt ist. Gemäß Figur 1a und 1b ist erkennbar, dass das Gehäuse 4 schalenförmig ausgestaltet ist und der Durchmesser dem der Kugelgewindemutter 2 entspricht. Das schalenförmige Gehäuse 4 umgreift dabei die Führungsspindel 1.

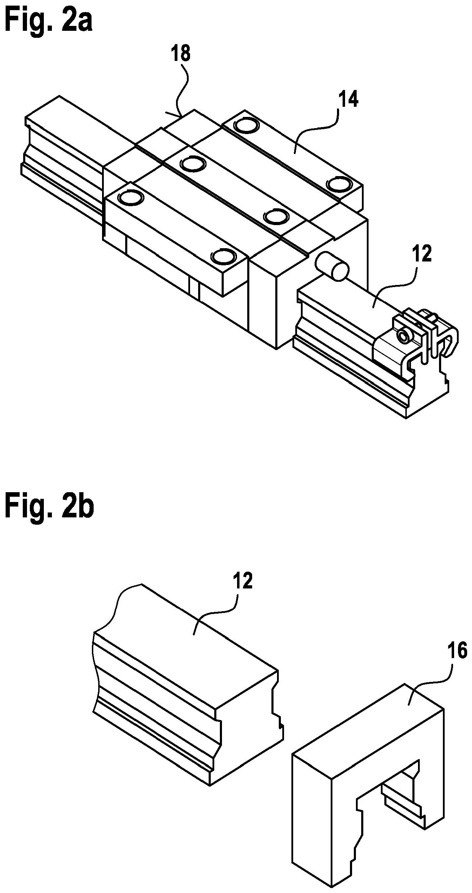

Gemäß Figur 2a und 2b ist eine weitere Ausführungsform einer Führung mit einem Führungsbauteil in Form einer Führungsschiene 12 und einer Führungskomponente in Form eines Führungswagens 14 vorgesehen. Ein Gehäuse 16 ist hierbei u-förmig ausgestaltet und weist insbesondere einen Sensor, eine Auswertevorrichtung und eine Energieerzeugungseinheit entsprechend Figur 1a auf. Das Gehäuse 16 kann an eine in Axialrichtung weisende Stirnseite 18 des Führungswagens 14 befestigt sein. In Radialrichtung kragt das Gehäuse 16 hierbei nicht über den Führungswagen 14 aus. Durch die u-förmige Ausgestaltung des Gehäuses 16 kann dieses vorteilhafterweise die Führungsschiene 12 umgreifen. Weist die Führungsschiene 12, entsprechend Figur 2a, eine Profilierung auf, so kann das Gehäuse 16 in die Profilierung mit einer entsprechenden Profilierung eingreifen.

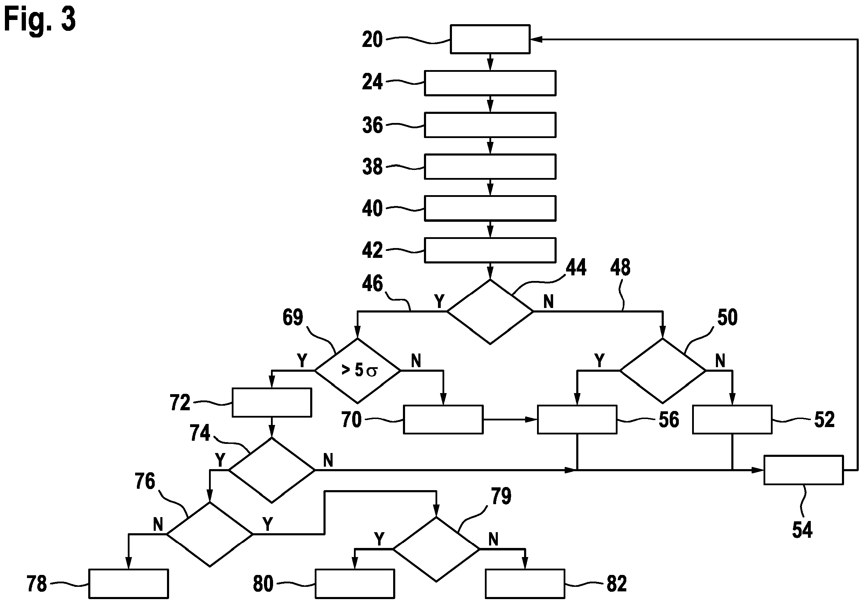

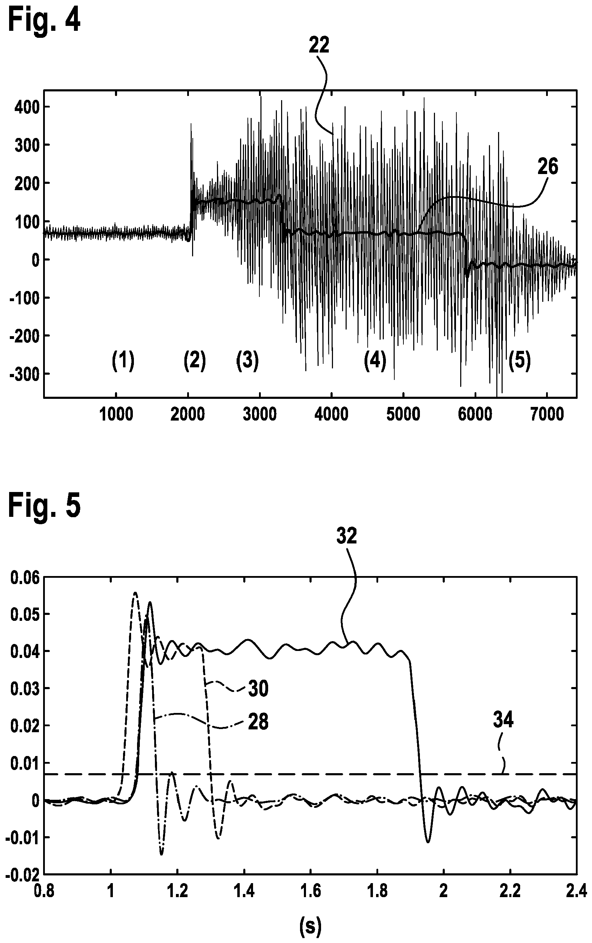

Gemäß dem Ablaufdiagramm in Figur 3a ist mit einem ersten Block eine Messung 20 gekennzeichnet. Bei der Messung wird vom Sensor 6, siehe Figur 1a, ein Schwingungssignal erfasst. Dieses ist in Figur 4 ersichtlich und mit dem Bezugszeichen 22 versehen. Das Schwingungssignal 22 ist in einem Diagramm eingezeichnet, wobei die Abszisse die Anzahl der Messungen aufzeigt und die Ordinate eine normierte Amplitude des Schwingungssignals 22. Gemäß Figur 3 wird nach der Messung 22 im Block 24 eine Ermittlung eines Bewegungsprofils basierend auf dem Schwingungssignal 22 durchgeführt. Hierzu wird das Schwingungssignal 22 über einen Tiefpassfilter digital gefiltert, wodurch gemäß Figur 4 ein Bewegungsprofil 26 erkennbar ist. Dieses weist mehrere Teile auf. Gemäß Figur 4 ist mit der Nummer 1 ein Stillstandsprofil, mit der Nummer 2 ein Startprofil, mit der Nummer 3 ein Beschleunigungsprofil, mit der Nummer 4 ein Profil konstanter Geschwindigkeit und mit der Nummer 5 ein Bremsprofil aufgezeigt. Die Ermüdungsdetektion wird zur Vermeidung ungewünschter Beschleunigungseinflüsse insbesondere bei dem Profil mit der konstanten Geschwindigkeit durchgeführt, weswegen es äußerst vorteilhaft ist, die unterschiedlichen Teile des Bewegungsprofils durch die Auswertevorrichtung 8, siehe Figur 1a, zu erfassen. Anhand des Stillstandsprofils und/oder des Startprofils wird die Geschwindigkeit der Kugelgewindemutter 2 beziehungsweise des Führungswagens 14, siehe Figur 1a und 2b, beim Profil konstanter Geschwindigkeit ermittelt. Dies ist in Figur 5 näher erläutert. Darin ist die Start- und Beschleunigungsphase der Linearbewegung durch unterschiedlich erreichte Geschwindigkeiten der Phase mit der konstanten Geschwindigkeit gezeigt. Auf einer Abszisse ist hierbei eine Zeit in Sekunden aufgetragen und auf einer Ordinate eine Amplitude. Eine Kurve 28 zeigt hierbei die Start- und Beschleunigungsphase bei einer Umdrehung eines Antriebsmotors von 50 Umdrehungen pro Minute. Eine weitere Kurve 30 zeigt dabei die Start- und Beschleunigungsphase bei einer 300 Umdrehungen pro Minute und eine Kurve 32 die Start- und Beschleunigungsphase bei 1000 Umdrehungen pro Minute. Die Berechnung der Geschwindigkeit erfolgt vorzugsweise mit den Abschnitten der Kurven 28, 30 oder 32, die oberhalb eines Schwellwerts 34 liegen.

Gemäß Figur 3 folgt nach dem Block 24 ein Block 36, bei dem ein Frequenzband des Schwingungssignals 22 ermittelt wird, wobei das Frequenzband für die Ermüdungsdetektion von der Auswertevorrichtung 8, siehe Figur 1a, herangezogen wird. Das Frequenzband wird auf Basis der errechneten Geschwindigkeit abgeschätzt und durch Filter, siehe Block 38 in Figur 3, von den nicht notwenigen Frequenzbändern bereinigt.

Im folgenden Block 40 in Figur 3 erfolgt eine Berechnung von relevanten Merkmalen des im Block 38 herausgearbeiteten Frequenzbands. Als Merkmale können beispielsweise ein Mittelwert oder ein MAD oder RMS Wert vorgesehen sein. Nach dem Block 40 kann ein Block 42 vorgesehen sein, bei dem eine Normierung der berechneten Merkmale auf die berechnete Geschwindigkeiten vorgesehen ist, so dass Auswirkungen von unterschiedlichen Geschwindigkeiten kompensiert werden. Im Anschluss folgt beim Block 44 eine Signalanalyse. Hierzu werden die ermittelten Merkmale kombiniert, wie eingangs erläutert, und das kombinierte Merkmal mit vorhergehend ermittelten Merkmalen verglichen. Ist eine Steigung des Merkmals oder eine Vergrößerung des Merkmals größer 0 vorgesehen, so wird das Verfahren gemäß Figur 3 mit dem linken Zweig 46 vorgesehen. Bleibt das Merkmal gleich oder verkleinert sich, so erfolgt eine Weiterführung des Verfahrens gemäß Figur 3 mit dem rechten Zweig 48. Im Zweig 48 wird im Block 50 untersucht, ob sich die Führung aus den Figur 1 bis 2 in einer stabilen Phase befindet, das heißt keine Ermüdung vorliegt und die Einlaufphase beendet ist. Liegt keine stabile Phase vor, so wird von der Auswertevorrichtung 8 gemäß Figur 3 im Block 52 die Einlaufphase erkannt und im Anschluss im Block 54 eine neue Messung initiiert. Bei der Einlaufphase sinkt das kombinierte Merkmal. Bleibt das Merkmal gleich, so folgt nach dem Block 50 der in Figur 3 vorgesehene Block 56. Darin werden die Grenzen der stabilen Phase adaptiv bei Bedarf angepasst und im Anschluss mit dem Block 54 eine neue Messung initiiert.

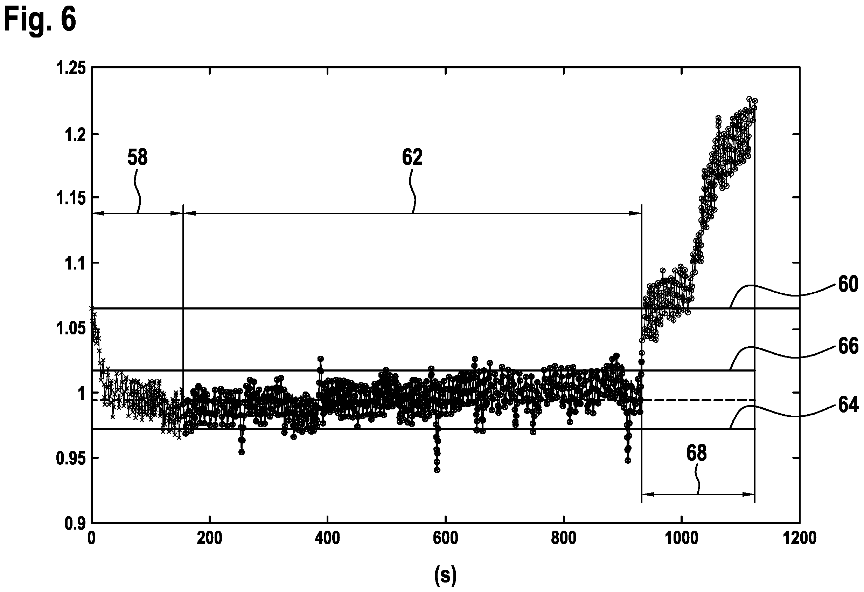

Gemäß Figur 6 sind die ermittelten kombinierten Merkmale dargestellt. Auf der Abszisse ist die Messanzahl gezeigt und auf der Ordinate der normierte Wert des kombinierten Merkmals. In der Einlaufphase 58 ist erkennbar, dass die kombinierten Merkmale ausgehend von einem Startniveau 60 der Einlaufphase sinken. Im Anschluss erfolgt eine stabile Phase 62, bei der die kombinierten Merkmale innerhalb von adaptiv veränderbaren Grenzen 64 und 66 gleich bleiben oder etwa gleich bleiben. Steigen die kombinierten Merkmale an, so wird von der Auswertevorrichtung 8 eine Ermüdungsphase 68 erkannt. Das heißt, wird im Block 44 gemäß Figur 3 eine Steigerung der kombinierten Merkmale festgestellt, so wird das Verfahren im linken Zweig 46 fortgesetzt. Zunächst wird in Block 69 festgestellt, ob die Steigerung des kombinierten Merkmals größer als $5\sigma$ ist, also es wird mit statistischen Mittel festgestellt ob eine Steigerung stattfindet.

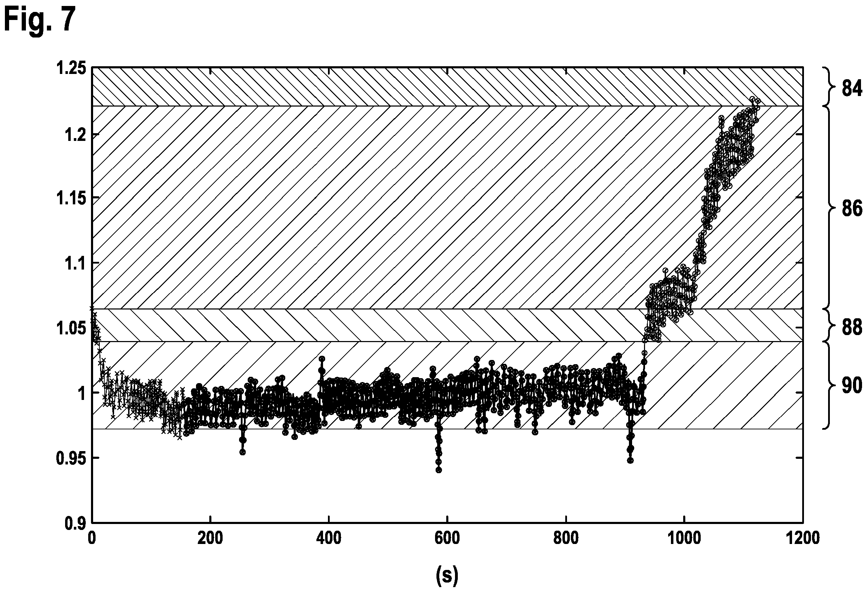

Ist das nicht der Fall, so wird in Block 70 ein Ausreißerzähler um einen Punkt verringert. Im Anschluss werden im Block 56 wieder die Grenzen 64, 66, siehe Figur 6, adaptiv angepasst. Ist das Ergebnis der statistischen Auswertung im Block 69 derart, dass die Steigerung des kombinierten Merkmals $5\sigma$ ist, so wird im Block 72 der Ausreißerzähler um einen Punkt erhöht. Im Folgeblock 74 wird dann festgestellt, ob die Anzahl der Ausreißer einen bestimmten Schwellwert überschritten hat. Ist dies nicht der Fall, so wird im Block 54 eine neue Messung initiiert. Ist das jedoch der Fall, so wird im Block 46 ermittelt, ob der normierte Wert des kombinierten Merkmals größer als das Startniveau 60, siehe Figur 6, ist. Ist dies nicht der Fall, dann wird im Block 78 eine Warnung Level 1 ausgegeben. Ist das der Fall, so folgt im Block 79 die Überprüfung, ob ein Grenzwert überschritten wird. Bei dem Grenzwert handelt es sich beispielsweise um eine geschätzte Restlebensdauer oder um einen absoluten Schwellwert oder um die in der Beschreibungseinleitung angeführten Grenzwerte. Ist der Grenzwert überschritten, dann wird im Block 80 ein Alarm ausgegeben. Ist der Grenzwert nicht überschritten, dann wird im Block 82 eine Warnung Level 2 ausgegeben. Dies ist schematisch in Figur 7 dargestellt. Hierbei sind die verschiedenen Warnstufen und der Alarm basierend auf der Figur 6 eingezeichnet. Sind die gemäß Figur 3 erläuterten Voraussetzungen erfüllt, so wird im Bereich 84 ein Alarm ausgegeben. Im Bereich 86 erfolgt eine Warnung Level 2, im Bereich 88 eine Warnung Level 1 und im Bereich 90 erfolgt keine Warnung oder kein Alarm.

Erfindungsgemäß ist eine Sensoranordnung, insbesondere für eine Führung, vorgesehen, die einen Sensor und eine Auswertevorrichtung aufweist. Die Auswertevorrichtung ermittelt basierend auf einem vom Sensor erfassten Schwingungssignal ein Bewegungsprofil der Führungskomponente, wobei ein Teil des Bewegungsprofils zur Ermüdungsdetektion verwendet ist. Alternativ oder zusätzlich kann vorgesehen sein, dass das vom Sensor erfasste Schwingungssignal gefiltert oder digital gefiltert ist und basierend auf dem gefilterten oder digital gefilterten Signal das oder ein Bewegungsprofil der Führungskomponente ermittelt ist.

Bezugszeichenliste

| | |
|---|---|
| 1 | Führungsspindel |
| 2 | Kugelgewindemutter |
| 4; 16 | Gehäuse |
| 6 | Sensor |
| 8 | Auswertevorrichtung |
| 10 | Energieerzeugungseinheit |
| 12 | Führungsschiene |
| 14 | Führungswagen |
| 18 | Stirnseite |
| 20 | Messung |
| 22 | Schwingungssignal |
| 24, 36, 38, 40, 42, 44, 50, 52, 54, 56, 69, 70, 72, 74, 76, 78, 79, 80, 82 | Block |
| 26 | Bewegungsprofil |
| 28, 30, 32 | Kurve |
| 34 | Schwellwert |
| 46 | linker Zweig |
| 48 | rechter Zweig |
| 58 | Einlaufphase |
| 60 | Startniveau |
| 62 | stabile Phase |
| 64, 66 | Grenze |
| 68 | Ermüdungsphase |
| 84, 86, 88, 90 | Bereich |

**Patentansprüche**

1. Verfahren mit einer Führung mit einem Führungsbauteil (1; 12) und mit einer über das Führungsbauteil (1; 12) geführten und bewegbaren Führungskomponente (2; 14), wobei ein Sensor (6) bei der Führungskomponente (2; 14) zum Erfassen eines Schwingungssignals (22) vorgesehen ist, und wobei eine Auswertevorrichtung (8) bei der Führungskomponente (2; 14) zum Auswerten des vom Sensor (6) erfassten Schwingungssignals (22) vorgesehen ist,

   wobei die Führungskomponente ein Führungswagen (14) ist und das Führungsbauteil eine Führungsschiene (12) ist, oder

wobei die Führungskomponente eine Gewindemutter (2) und das Führungsbauteil eine Führungsspindel (1) ist, wobei das vom Sensor (6) erfasste Schwingungssignal (22) digital gefiltert wird und basierend auf dem digital gefilterten Signal ein Bewegungsprofil (26) der Führungskomponente (2; 14) ermittelt wird,

wobei über die Auswertevorrichtung (8) mehrere Teile des Bewegungsprofils (26) der Führungskomponente (2; 14) ermittelt werden, wobei es sich bei den Teilen um mehrere der folgenden Teile handelt: ein Stillstandsprofil und/oder ein Startprofil und/oder ein Beschleunigungsprofil und/oder ein Profil konstanter Geschwindigkeit und/oder ein Bremsprofil,

wobei das Schwingungssignal (22) eines ermittelten Teils des Bewegungsprofils (26) zur Ermüdungsdetektion verwendet wird,

wobei die Auswertevorrichtung (8) beim Schwingungssignal (22) eines Teils des Bewegungsprofils ein oder mehrere Merkmal/e ermittelt,

wobei das Merkmal oder die Merkmale aus folgenden Merkmalen ausgewählt sind: Mittelwert, mittlere absolute Abweichung (MAD), quadratischer Mittelwert,

wobei das ermittelte Merkmal oder die ermittelten Merkmale auf einem Speicher speicherbar sind,

wobei von der Auswertevorrichtung das ermittelte Merkmal oder die ermittelten Merkmale mit den entsprechenden gespeicherten Merkmalen verglichen werden,

wobei die Auswertevorrichtung (8) von einer nicht-Veränderung des oder der Merkmal/e ausgeht, wenn dieses/diese unterhalb einer Grenze (66) oder oberen Grenze (66) und/oder oberhalb einer Grenze (64) oder unteren Grenze (64) und/oder zwischen zwei Grenzen (64, 66) liegt oder liegen, wobei das Merkmal oder die Merkmale bei einer Berechnung der Grenze (64, 66) oder der Grenzen (64, 66) eingesetzt werden und die Grenze (64, 66) oder die Grenzen (64, 66) hierdurch adaptiv angepasst wird/werden.

2. Verfahren nach Anspruch 1, wobei ein Frequenzband des Schwingungssignals (22) ermittelt ist, wobei das Frequenzband für die Ermüdungsdetektion von der Auswertevorrichtung (8) herangezogen ist.

3. Verfahren nach Anspruch 1 oder 2, wobei die digitale Filterung über einen Tiefpass und/oder über eine diskrete Wavelet Transformation erfolgt.

4. Verfahren nach einem der vorhergehenden Ansprüche, wobei die Auswertevorrichtung (8) die Ermüdungsdetektion im Bewegungsprofil (26) der konstanten Geschwindigkeit durchführt, und/oder wobei die Geschwindigkeit der Führungskomponente (2; 14) anhand des Schwingungssignals (22) ermittelt ist.

5. Verfahren nach Anspruch 4, wobei die Ermittlung der Geschwindigkeit anhand des Startprofils und/oder anhand des Beschleunigungsprofils erfolgt.

6. Verfahren nach einem Ansprüche 2 bis 5, wobei die Auswertevorrichtung (8) beim ermittelten Frequenzband ein oder mehrere Merkmal/e ermittelt.

7. Verfahren nach einem der vorhergehenden Ansprüche, wobei über die Auswertevorrichtung (8) das ermittelte Merkmal oder die ermittelten Merkmale mit der ermittelten Geschwindigkeit normiert ist/sind, und/oder wobei von der Auswertevorrichtung (8) bei mehreren ermittelten unterschiedlichen Typen von Merkmalen diese kombiniert sind, und/oder wobei die Auswertevorrichtung (8) bei einer Vergrößerung des Merkmals oder der Merkmale oder der kombinierten Merkmale eine Warnung und/oder einen Alarm ausgibt.

8. Verfahren nach einem der vorhergehenden Ansprüche, wobei am Führungswagen (14) ein Gehäuse (16) festgelegt ist, das den Sensor (6) und/oder die Auswertevorrichtung (8) aufweist, wobei das Gehäuse (16) auf einer in Längsrichtung weisenden Seite des Führungswagens (14) angeordnet ist und/oder wobei das Gehäuse (16) die Führungsschiene (12) übergreift oder teilweise umfasst oder vollständig umfasst, oder wobei an der Gewindemutter (2) ein Gehäuse (4) festgelegt ist, das den Sensor (6) und/oder die Auswertevorrichtung (8) aufweist, wobei das Gehäuse (4) axial an der Gewindemutter (2) angeordnet ist und/oder wobei das Gehäuse (4) die Führungsspindel (1) übergreift oder teilweise umfasst oder vollständig umfasst.

9. Verfahren nach einem der vorhergehenden Ansprüche, wobei eine Steigung des oder der Merkmal/e oder kombinierten Merkmale im Vergleich zu dem oder den vorherigen Merkmal/en oder kombinierten Merkmalen von der Auswertevorrichtung (8) berechnet ist, wobei bei einer Steigung des Merkmals oder der Merkmale oder kombinierter Merkmale von kleiner oder gleich 0 die Auswertevorrichtung (8) daraus schließt, dass keine Ermüdung vorliegt,

und/oder wobei bei einer Steigung des Merkmals oder der Merkmale oder der kombinierten Merkmale von etwa 0 die Auswertevorrichtung (8) daraus schließt, dass sich die Führung in einer stabilen Phase befindet, und/oder wobei bei einer Steigung des Merkmals oder der Merkmale oder kombinierten Merkmale von größer 0 die Auswertevorrichtung (8) daraus schließt, dass bei der Führung eine Ermüdung vorliegt.

**10.** Verfahren nach einem der vorhergehenden Ansprüche, wobei die Auswertevorrichtung (8) bei einem Überschreiten einer Grenze (66) oder einer oberen Grenze (66) von dem oder den Merkmale/n oder dem kombinierten Merkmal eine Warnung ausgibt, und/oder wobei die Auswertevorrichtung (8) bei einem Überschreiten eines Werts des oder der Merkmale oder des kombinierten Merkmals gegenüber dem maximalen Wert des entsprechenden Merkmals oder der entsprechenden Merkmale in einer Einlaufphase (58) der Führungskomponente (2; 14) oder zu Beginn der Aufzeichnungen der Führungskomponente (2; 14) eine Warnung oder eine weitere Warnung ausgibt, und/oder wobei die Auswertevorrichtung (8) einen Alarm oder eine Warnung ausgibt, wenn eine oder mehrere Voraussetzungen erfüllt sind, die aus folgenden Voraussetzungen ausgewählt ist/sind: nach der weiteren Warnung ist eine vorbestimmte Zyklenzahl erreicht; eine geschätzte Restlebensdauer ist erreicht; ein oder mehrere Merkmale überschreiten eine bestimmte statistische Grenze; eine absolute oder konfigurierbare Grenze oder Schwellwert für das Merkmal oder die Merkmale oder eines Teils der Merkmale ist erreicht.

**11.** Verfahren nach einem der vorhergehenden Ansprüche, wobei eine Wegstrecke der Führungskomponente (2; 14) von der Auswertevorrichtung (8) ermittelt ist, und wobei die Auswertevorrichtung (8) die Ermüdungsdetektion ortsaufgelöst durchführt, um das Führungsbauteil (1;12) zu monitoren.

**Claims**

**1.** Method using a guide having a guide part (1; 12) and having a guide component (2; 14) guided and movable via the guide part (1; 12), wherein a sensor (6) is provided in the case of the guide component (2; 14) to detect a vibration signal (22), and wherein an analysis device (8) is provided in the case of the guide component (2; 14) to analyse the vibration signal (22) detected by the sensor (6),

wherein the guide component is a guide carriage (14) and the guide part is a guide rail (12), or
wherein the guide component is a threaded nut (2) and the guide part is a guide spindle (1),
wherein the vibration signal (22) detected by the sensor (6) is digitally filtered and a movement profile (26) of the guide component (2; 14) is determined based on the digitally filtered signal,
wherein multiple parts of the movement profile (26) of the guide component (2; 14) are determined via the analysis device (8), wherein the parts are several of the following parts: a standstill profile and/or a starting profile and/or an acceleration profile and/or a profile of constant velocity and/or a braking profile,
wherein the vibration signal (22) of a determined part of the movement profile (26) is used for the fatigue detection,
wherein the analysis device (8) determines one or more characteristic(s) in the vibration signal (22) of a part of the movement profile,
wherein the characteristic or the characteristics is/are selected from the following characteristics: mean value, mean absolute deviation (MAD), root mean square, wherein the determined characteristic or the determined characteristics can be stored in a memory,
wherein the analysis device compares the determined characteristic or the determined characteristics with the corresponding stored characteristics,
wherein the analysis device (8) presumes a non-change of the characteristic(s) if it or they is/are below a limit (66) or upper limit (66) and/or above a limit (64) or lower limit (64) and/or between two limits (64, 66), wherein the characteristic or the characteristics is/are used in a computation of the limit (64, 66) or the limits (64, 66) and the limit (64, 66) or the limits (64, 66) is/are adaptively adjusted in this way.

**2.** Method according to Claim 1, wherein a frequency band of the vibration signal (22) is determined, wherein the frequency band is used by the analysis device (8) for the fatigue detection.

**3.** Method according to Claim 1 or 2, wherein the digital filtering is carried out via a low-pass filter and/or via a discrete wavelet transformation.

**4.** Method according to any one of the preceding claims, wherein the analysis device (8) carries out the fatigue detection in the movement profile (26) of the constant velocity, and/or wherein the velocity of the guide component (2; 14) is determined on the basis of the vibration signal (22).

**EP 3 546 778 B1**

5. Method according to Claim 4, wherein the determination of the velocity is carried out on the basis of the starting profile and/or on the basis of the acceleration profile.

6. Method according to any one of Claims 2 to 5, wherein the analysis device (8) determines one or more characteristic(s) in the determined frequency band.

7. Method according to any one of the preceding claims, wherein the determined characteristic or the determined characteristics is/are scaled using the determined velocity via the analysis device (8), and/or wherein, in the case of multiple determined different types of characteristics, these are combined by the analysis device (8), and/or wherein the analysis device (8) outputs a warning and/or an alarm in the event of an increase of the characteristic or the characteristics or the combined characteristics.

8. Method according to any one of the preceding claims, wherein a housing (16), which has the sensor (6) and/or the analysis device (8), is fixed on the guide carriage (14), wherein the housing (16) is arranged on a side of the guide carriage (14) facing in the longitudinal direction, and/or wherein the housing (16) encloses the guide rail (12) or partially encompasses or completely encompasses it, or wherein a housing (4), which has the sensor (6) and/or the analysis device (8), is fixed on the threaded nut (2), wherein the housing (4) is arranged axially on the threaded nut (2), and/or wherein the housing (4) encloses the guide spindle (1) or partially encompasses or completely encompasses it.

9. Method according to any one of the preceding claims, wherein a slope of the characteristic(s) or combined characteristics is computed in comparison to the preceding characteristic(s) or combined characteristics by the analysis device (8), wherein, in the event of a slope of the characteristic or the characteristics or combined characteristics of less than or equal to 0, the analysis device (8) concludes therefrom that no fatigue is present,

and/or wherein, in the event of a slope of the characteristic or the characteristics or the combined characteristics of approximately 0, the analysis device (8) concludes therefrom that the guide is in a stable phase,
and/or wherein, in the event of a slope of the characteristic or the characteristics or combined characteristics of greater than 0, the analysis device (8) concludes therefrom that fatigue is present in the guide.

10. Method according to any one of the preceding claims, wherein the analysis device (8) outputs a warning if the characteristic(s) or the combined characteristic exceed(s) a limit (66) or an upper limit (66),

and/or wherein the analysis device (8) outputs a warning or a further warning if a value of the characteristic(s) or the combined characteristic exceeds the maximum value of the corresponding characteristic or the corresponding characteristics in a running-in phase (58) of the guide component (2; 14) or at the beginning of the recordings of the guide component (2; 14),
and/or wherein the analysis device (8) outputs an alarm or a warning if one or more conditions are fulfilled, which is/are selected from the following conditions: after the further warning, a predetermined number of cycles is reached; an estimated remaining service life is reached; one or more characteristics exceed a determined statistical limit; an absolute or configurable limit or threshold value for the characteristic or the characteristics or a part of the characteristics is reached.

11. Method according to any one of the preceding claims, wherein a route of the guide component (2; 14) is determined by the analysis device (8), and wherein the analysis device (8) carries out the fatigue detection in a location-resolved manner in order to monitor the guide part (1; 12).

**Revendications**

1. Procédé comprenant un guidage doté d'un élément de guidage (1 ; 12) et d'un composant de guidage (2 ; 14) guidé et pouvant se déplacer sur l'élément de guidage (1 ; 12),

un capteur (6) étant prévu sur le composant de guidage (2 ; 14) pour détecter un signal de vibration (22), et un dispositif d'évaluation (8) étant prévu sur le composant de guidage (2 ; 14) pour évaluer le signal de vibration (22) détecté par le capteur (6),
le composant de guidage étant un chariot de guidage (14) et l'élément de guidage étant un rail de guidage (12), ou le composant de guidage étant un écrou fileté (2) et l'élément de guidage étant une broche filetée (1),

le signal de vibration (22) détecté par le capteur (6) étant filtré numériquement, et un profil de déplacement (26) du composant de guidage (2 ; 14) étant déterminé sur la base du signal filtré numériquement,

le dispositif d'évaluation (8) déterminant plusieurs parties du profil de déplacement (26) du composant de guidage (2 ; 14), les parties étant plusieurs des parties suivantes : un profil d'arrêt et/ou un profil de démarrage et/ou un profil d'accélération et/ou un profil à vitesse constante et/ou un profil de freinage, le signal de vibration (22) d'une partie déterminée du profil de déplacement (26) étant utilisé pour la détection de fatigue,

le dispositif d'évaluation (8) déterminant pour le signal de vibration (22) d'une partie du profil de déplacement une ou plusieurs particularités,

la particularité ou les particularités étant sélectionnées parmi les particularités suivantes : une moyenne, un écart absolu moyen (MAD), une moyenne quadratique,

la particularité déterminée ou les particularités déterminées pouvant être enregistrées dans une mémoire, le dispositif d'évaluation comparant la particularité déterminée ou les particularités déterminées avec les particularités enregistrées correspondantes,

le dispositif d'évaluation (8) supposant une non variation de la ou des particularités si elle (s) se trouve(nt) au-dessous d'une limite (66) ou limite supérieure (66) et/ou au-dessus d'une limite (64) ou limite inférieure (64) et/ou entre deux limites (64, 66), la particularité ou les particularités étant substituée(s) lors d'un calcul de la limite (64, 66) ou des limites (64, 66), et la limite (64, 66) ou les limites (64, 66) étant ainsi ajustée(s) de manière adaptative.

2. Procédé selon la revendication 1, dans lequel une bande de fréquence du signal de vibration (22) est déterminée, la bande de fréquence étant utilisée par le dispositif d'évaluation (8) pour la détection de fatigue.

3. Procédé selon la revendication 1 ou 2, dans lequel le filtrage numérique est effectué par un filtre passebas et/ou par une transformation d'ondelette discrète.

4. Procédé selon l'une quelconque des revendications précédentes, dans lequel le dispositif d'évaluation (8) effectue la détection de fatigue dans le profil de déplacement (26) à la vitesse constante, et/ou dans lequel la vitesse du composant de guidage (2 ; 14) est déterminée à l'aide du signal de vibration (22).

5. Procédé selon la revendication 4, dans lequel la détermination de la vitesse est effectuée à l'aide du profil de démarrage et/ou à l'aide du profil d'accélération.

6. Procédé selon l'une quelconque des revendications 2 à 5, dans lequel le dispositif d'évaluation (8) détermine une ou plusieurs particularités pour la bande de fréquence déterminée.

7. Procédé selon l'une quelconque des revendications précédentes, dans lequel la particularité ou les particularités déterminée(s) sont normalisée(s) avec une vitesse déterminée par l'intermédiaire du dispositif d'évaluation (8), et/ou dans lequel, lorsque plusieurs types de particularités différents sont déterminés, le dispositif d'évaluation (8) les combine, et/ou dans lequel, lors d'une augmentation de la particularité ou des particularités ou des particularités combinées, le dispositif d'évaluation (8) émet un avertissement et/ou une alarme.

8. Procédé selon l'une quelconque des revendications précédentes, dans lequel, sur le chariot de guidage (14), est fixé un boîtier (16) qui présente le capteur (6) et/ou le dispositif d'évaluation (8), le boîtier (16) étant disposé sur un côté du chariot de guidage (14) orienté dans la direction longitudinale, et/ou le boîtier (16) recouvrant ou entourant partiellement ou entourant complètement le rail de guidage (12), ou dans lequel, sur l'écrou fileté (2), est fixé un boîtier (4) qui présente le capteur (6) et/ou le dispositif d'évaluation (8), le boîtier (4) étant disposé axialement sur l'écrou fileté (2) et/ou le boîtier (4) recouvrant ou entourant partiellement ou entourant complètement la broche de guidage (1).

9. Procédé selon l'une quelconque des revendications précédentes, dans lequel un gradient de la ou des particularités ou des particularités combinées est calculé par le dispositif d'évaluation (8) en comparaison avec la ou les particularités précédentes ou les particularités combinées, dans lequel, pour un gradient de la particularité ou des particularités ou des particularités combinées inférieur ou égal à 0, le dispositif d'évaluation (8) conclut qu'il n'existe aucune fatigue,

et/ou dans lequel, pour un gradient de la particularité ou des particularités ou des particularités combinées d'environ 0, le dispositif d'évaluation (8) conclut que le guidage se trouve dans une phase stable,

et/ou dans lequel, pour un gradient de la particularité ou des particularités ou des particularités combinées supérieur à 0, le dispositif d'évaluation (8) conclut que le guidage présente de la fatigue.

10. Procédé selon l'une quelconque des revendications précédentes, dans lequel le dispositif d'évaluation (8) émet un avertissement pour un dépassement d'une limite (66) ou d'une limite supérieure (66) par la ou les particularités ou la particularité combinée,

et/ou dans lequel le dispositif d'évaluation (8) émet un avertissement ou un autre avertissement pour un dépassement d'une valeur de la ou des particularités ou de la particularité combinée par rapport à la valeur maximale de la particularité correspondante ou des particularités correspondantes dans une phase de mise en marche (58) du composant de guidage (2 ; 14) ou au début des enregistrements du composant de guidage (2 ; 14),

et/ou dans lequel le dispositif d'évaluation (8) émet une alarme ou un avertissement si une ou plusieurs conditions préalables sont satisfaites qui sont sélectionnées parmi les conditions préalables suivantes : après l'autre avertissement, un nombre de cycles prédéterminé est atteint ; une durée de vie restante estimée est atteinte ; une ou plusieurs particularités dépassent une certaine limite statistique ; une limite absolue ou configurable ou une valeur seuil pour la particularité ou les particularités ou une partie des particularités est atteinte.

11. Procédé selon l'une quelconque des revendications précédentes, dans lequel un parcours du composant de guidage (2 ; 14) est déterminé par le dispositif d'évaluation (8), et le dispositif d'évaluation (8) effectuant la détection de fatigue à résolution spatiale pour surveiller l'élément de guidage (1 ; 12).

# Fig. 1a

# Fig. 1b

# Fig. 2a

# Fig. 2b

Fig. 3

**Fig. 4**

**Fig. 5**

Fig. 6

## Fig. 7

EP 3 546 778 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112005002077 T5
- DE 102015201121 A1
- DE 102009033137 A1